(19) Europäisches Patentamt
European Patent Office
Office européen des brevets

(11) **EP 2 457 248 B1**

(12) **FASCICULE DE BREVET EUROPEEN**

(45) Date de publication et mention
de la délivrance du brevet:
**08.11.2017 Bulletin 2017/45**

(21) Numéro de dépôt: **10741930.1**

(22) Date de dépôt: **23.07.2010**

(51) Int Cl.:
***H01J 47/02*** *(2006.01)*

(86) Numéro de dépôt international:
**PCT/EP2010/060747**

(87) Numéro de publication internationale:
**WO 2011/009953 (27.01.2011 Gazette 2011/04)**

(54) **DISPOSITIF ET METHODE POUR LA DOSIMETRIE D'UN FAISCEAU ENERGETIQUE DE PARTICULES**

VORRICHTUNG UND VERFAHREN ZUR MESSUNG EINES ENERGIEPARTIKELSTRAHLS

DEVICE AND METHOD FOR THE DOSIMETRY OF AN ENERGETIC BEAM

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **24.07.2009 BE 200900453**

(43) Date de publication de la demande:
**30.05.2012 Bulletin 2012/22**

(73) Titulaire: **Ion Beam Applications S.A.**
**1348 Louvain-la-Neuve (BE)**

(72) Inventeur: **PRIEELS, Damien**
**B-1490 Court-Saint-Etienne (BE)**

(74) Mandataire: **Pronovem**
**Office Van Malderen**
**Avenue Josse Goffin 158**
**1082 Bruxelles (BE)**

(56) Documents cités:
**FR-A- 1 224 624      GB-A- 958 240**
**US-A- 2 643 343      US-A- 3 287 560**
**US-A- 4 780 897**

- **LAITANO R F ET AL: "Charge collection efficiency in ionization chambers exposed to electron beams with high dose per pulse; Charge collection efficiency in ionization chambers exposed to electron beams" PHYSICS IN MEDICINE AND BIOLOGY, TAYLOR AND FRANCIS LTD. LONDON, GB LNKD-DOI:10.1088/0031-9155/51/24/009, vol. 51, no. 24, 21 décembre 2006 (2006-12-21), pages 6419-6436, XP020096083 ISSN: 0031-9155**

**Description**

**DOMAINE TECHNIQUE**

La présente invention se réfère au domaine de la dosimétrie d'un faisceau énergétique de particules. Plus particulièrement, la présente invention concerne un dispositif comprenant plusieurs chambres d'ionisation et une méthode permettant la mesure d'un facteur d'efficacité de collection de charges dans une chambre d'ionisation.

**ARRIERE-PLAN TECHNOLOGIQUE**

Les chambres d'ionisation sont des détecteurs standards de dosimétrie utilisés généralement en radiothérapie. Une chambre d'ionisation comprend une électrode de polarisation séparée d'une électrode collectrice par un gap ou espace comprenant un fluide de nature quelconque (y compris de l'air).

On rencontre plusieurs types de chambres d'ionisation comme par exemple les chambres d'ionisation dites cylindriques et les chambres d'ionisation comprenant des plaques parallèles. Les chambres d'ionisation cylindriques comprennent une électrode centrale ou axiale généralement sous la forme d'un très fin cylindre, isolé d'une seconde électrode en forme de cylindre creux ou de capuchon entourant ladite électrode centrale ou axiale. Les chambres d'ionisation comprenant des plaques parallèles présentent une électrode collectrice séparée d'une électrode de polarisation, ces électrodes collectrice et de polarisation étant planes et parallèles entre elles.

Le fluide compris dans le gap ou espace séparant les électrodes collectrice et de polarisation d'une chambre d'ionisation utilisée en dosimétrie est le plus souvent un gaz neutre ou non. Lorsqu'un faisceau ionisant traverse la chambre d'ionisation, il y a ionisation du gaz compris entre les électrodes et des paires ion-électron se créent. Un champ électrique est généré en appliquant une différence de potentiel entre les deux électrodes de la chambre d'ionisation. La présence d'un champ électrique permet de séparer ces paires ion-électron et de les faire dériver sur les électrodes, induisant un courant au niveau de ces électrodes qui sera détecté.

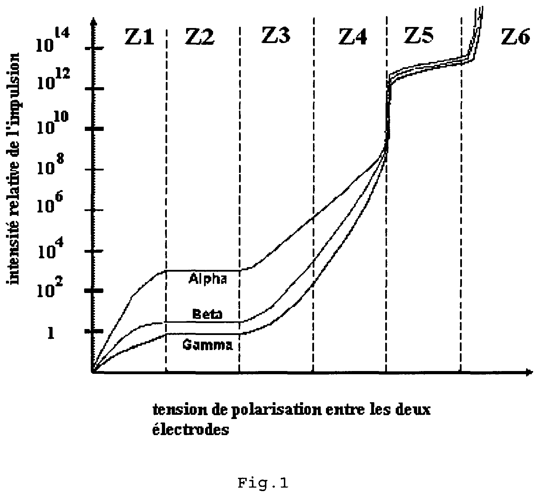

La courbe de la fig. 1 est un exemple de l'évolution de l'amplitude de l'impulsion électrique reçue par l'électrode collectrice en fonction de la différence de potentiel électrique entre l'électrode collectrice et l'électrode de polarisation. Cette courbe peut être divisée en 6 zones reprenant les différents régimes de détecteur à gaz :

- Z1 : régime non saturé ;
- Z2 : régime saturé ;
- Z3 : régime proportionnel ;
- Z4 : régime de proportionnalité limitée ;
- Z5 : régime Geiger-Müller ;
- Z6 : régime de décharge continu.

Dans la zone Z1, dite zone de régime non saturé, lorsque le champ électrique entre les deux plaques est inexistant, il y a recombinaison des paires ion-électron. En appliquant une différence de potentiel électrique croissante entre les deux électrodes, le champ électrique résultant sépare de plus en plus efficacement les paires ion-électron, et les phénomènes de recombinaison s'atténuent. Les charges positives et négatives sont entraînées vers leurs électrodes respectives de plus en plus rapidement, en fonction de l'intensité du champ électrique, réduisant l'équilibre de concentration d'ions dans le gaz, et par conséquent, le nombre de recombinaisons. Le courant mesuré dans la chambre d'ionisation s'accroît avec le champ électrique crée dans la chambre d'ionisation, réduisant les quantités de charges perdues. Lorsqu'un champ électrique crée entre les deux électrodes est suffisamment puissant, les effets de recombinaison deviennent négligeables et toutes les charges créées par le processus d'ionisation contribuent à la mesure du courant. A ce niveau, l'efficacité de collection de charges est maximale et augmenter la différence de potentiel entre les deux électrodes ne permettra plus d'accroitre le courant mesuré car toutes les charges créées sont déjà collectées et leur vitesse de formation est constante. On se trouve dans la zone Z2, dite zone de régime saturé, là où les mesures de dosimétrie dans les chambres d'ionisation sont généralement réalisées en radiothérapie. Sous ces conditions, le courant mesuré est une bonne indication de la dose déposée par un faisceau dans le volume de la chambre d'ionisation.

Plusieurs facteurs peuvent nuire à la saturation d'une chambre d'ionisation. Parmi ceux-ci, le plus important est le phénomène de recombinaison. Ce phénomène peut être minimisé en ajustant les différents paramètres de la chambre d'ionisation comme par exemple l'épaisseur du gap entre les deux électrodes, la nature et/ou la pression du gaz compris dans ce gap, etc. Les effets de recombinaison peuvent également dépendre de la taille et/ou de la forme du faisceau. Les phénomènes de recombinaison vont également croître de manière proportionnelle en fonction de l'intensité du courant du faisceau. Le pourcentage de perte de courant dû aux recombinaisons et donc le pourcentage d'erreur du courant qui est mesuré en dessous de la vraie région de saturation augmente proportionnellement avec l'intensité du courant. Pour des faisceaux d'intensité moins intenses, l'effet de recombinaison est moins déterminant.

Pour la mesure de faisceaux de haute intensité, une différence de potentiel suffisamment élevée entre les électrodes est requise pour travailler dans les conditions de saturation.

Pour des courants de faisceaux de très haute intensité, comme ceux rencontrés dans des techniques avancées de radiothérapie, on atteint la limite technologique d'utilisation des chambres d'ionisation classiques. Les phénomènes de recombinaison deviennent très importants et dès lors, une méthode fiable de correction de la mesure est indispensable.

Il serait possible de travailler dans la zone Z1 dite de régime non saturé près de la zone de régime saturé en prenant en compte les erreurs dues à la recombinaison qui sont significatives. Dans ce cas, il est nécessaire de connaitre les niveaux de saturation de la chambre d'ionisation en fonction du courant de faisceau. Une courbe de calibration reprenant l'intensité du courant de faisceau en fonction de l'intensité du courant collecté peut être réalisée en mesurant les courants d'ionisation en fonction du courant de faisceau, dans le but de connaitre le courant de faisceau. Mais pour que cette calibration reste valide, il faut que les autres paramètres tels que la différence de potentiel appliquée entre les deux électrodes, le gap, la pression à l'intérieur de la chambre d'ionisation, l'énergie, la taille et la forme du faisceau restent constants. Un autre défaut de cette méthode est qu'elle ne permet pas de faire la différence entre une variation du signal due à un courant de faisceau et une variation du signal due à un dérèglement d'un des paramètres de la chambre d'ionisation. Pour pallier à ces problèmes de mesures, de nouveaux dispositifs de dosimétrie permettant de mesurer des courants de faisceau dans une large gamme d'intensité sont nécessaires.

Le brevet américain US 3 287 560 A décrit un dispositif de dosimétrie selon le préambule de la revendication 1.

**BUTS DE L'INVENTION**

La présente invention a pour objet de fournir un dispositif et une méthode ne présentant pas les inconvénients des dispositifs et méthodes de l'art antérieur.

En particulier, la présente invention a pour but de pouvoir mesurer le facteur d'efficacité de collection de charges dans une chambre d'ionisation soumise à un faisceau énergétique de particules.

Un autre but de la présente invention est de pouvoir mesurer la dose ou le débit de dose déposée par un faisceau de particules d'énergie et/ou d'intensité variable dans les conditions où l'efficacité de collection de charges dans une chambre d'ionisation n'est pas maximale, c'est-à-dire dans des conditions où une chambre d'ionisation présente des phénomènes de recombinaison significatifs.

Un but complémentaire de la présente invention est de fournir un dispositif de dosimétrie couvrant une large gamme d'intensité de courant de faisceau de particules.

RESUME DE L'INVENTION

Un premier aspect de la présente invention concerne un dispositif de dosimétrie d'un faisceau énergétique de particules provenant d'une source et comprenant au moins deux chambres d'ionisation comprenant chacune une électrode collectrice et une électrode de polarisation, lesdites électrodes de chaque chambre d'ionisation étant séparées par un gap ou espace comprenant un fluide de pression et température prédéterminées, lesdites chambres d'ionisation étant configurées pour être traversées par un faisceau énergétique de particules provenant d'une même source, le dispositif étant caractérisé en ce que lesdites chambres d'ionisation présentent des facteurs d'efficacité de collection de charges différents.

Selon l'inveniton, le dispositif comprend un dispositif d'acquisition relié à un calculateur effectuant un algorithme de calcul du débit de dose déposé par ledit faisceau de particules basé sur :

- la mesure d'un signal de sortie dans chaque chambre d'ionisation considérée et ;

- un facteur « gain » relatif à une première chambre d'ionisation, donné par l'équation : $G = \dfrac{1-\left(\frac{i1}{i2}\right)_{norm}}{1-f_1}$ où

- G est le facteur « gain » relatif à la première chambre d'ionisation (IC1),

- $\left(\dfrac{i1}{i2}\right)_{norm}$ est le rapport de valeurs théoriques de signaux de sortie (i1 et i2) dans les deux chambres d'ionisation considérées (IC1 et IC2) normalisé par le rapport de leur facteur d'amplification respectifs (R1/R2), chaque facteur d'amplification dépendant dudit fluide, de la largeur dudit gap et du pouvoir de pénétration du faisceau de particules dans ledit fluide pour une chambre d'ionisation considérée,

- 1 - $f_1f_1$ est la valeur théorique du facteur d'efficacité de collection de charges dans la première chambre d'ionisation (IC1),

lesdites valeurs théoriques de signaux de sortie (i1, i2) et f1 étant calculées en fonction de paramètres intrinsèques et/ou extrinsèques desdites chambres considérées (IC1 et IC2), ainsi qu'en fonction de la valeur de l'intensité de courant du faisceau de particules, ledit facteur gain étant indépendant de la valeur dudit courant du faisceau de particules.

Selon un forme d'exécution spécifique de l'invention, ledit algorithme de calcul est capable d'effectuer les étapes suivantes :

- mesure des signaux de sortie (i1 et i2) dans les deux chambres d'ionisation considérées, et établissement du rapport normalisé $\left(\dfrac{i1}{i2}\right)_{norm}$ entre lesdites valeurs de signaux de sortie (i1 et i2) ;

- calcul du taux de recombinaison de charges (1-f) et déduction du facteur d'efficacité de collection de charges (f) dans une chambre d'ionisation considérée sur base du résultat de la première étape de l'algorithme et sur base de la connaissance du facteur « gain » de la chambre d'ionisation considérée;

- calcul du débit de dose déposée par le faisceau sur base du facteur d'efficacité de collection de charges dans la chambre d'ionisation considérée.

Le facteur d'efficacité de collection de charges est lié à la sensibilité d'une chambre d'ionisation et peut être défini comme un paramètre exprimant la variation d'un signal de sortie d'un dispositif de mesure en fonction de la variation d'un signal d'entrée. En particulier, le signal de sortie est le courant mesuré à la sortie d'une chambre d'ionisation.

Pour une chambre d'ionisation, la sensibilité peut dépendre de :

- l'épaisseur du gap séparant l'électrode collectrice et l'électrode de polarisation,
- la différence de potentiel entre les deux électrodes,
- la nature du fluide compris entre les deux électrodes,
- la pression et/ou la température à laquelle se trouve le fluide compris entre les deux électrodes,
- la géométrie de la chambre d'ionisation,
- la position de la chambre d'ionisation par rapport à la position de la source du faisceau énergétique,
- la présence d'un absorbeur d'énergie entre la chambre d'ionisation et la source,

les deux derniers facteurs définissant les paramètres extrinsèques alors que les premiers facteurs définissent les paramètres intrinsèques d'une chambre d'ionisation.

Par « différent », on entend une variation très faible d'au moins 0,05%, de préférence d'au moins 0,1%, de préférence d'au moins 1%. En effet, une différence de facteur d'efficacité supérieure à 0,05% pour des courants de faisceau de 1 à 100 nA est déjà suffisante pour donner une variation de courant significative (supérieure à 1%).

Dans un premier mode de réalisation de l'invention, lesdites chambres d'ionisation, présentent une différence au niveau des épaisseurs de gap compris entre lesdites électrodes collectrice et de polarisation pour chaque chambre d'ionisation.

Dans un second mode de réalisation, en combinaison ou non avec le premier mode de réalisation de l'invention, lesdites chambres d'ionisation présentent une différence au niveau des champs électriques crées entre lesdites électrodes collectrice et de polarisation pour chaque chambre d'ionisation.

Dans un troisième mode de réalisation de l'invention combiné avec un ou plusieurs modes de réalisation précédents, lesdites chambres d'ionisation présentent une différence au niveau de la nature des fluides présents dans le gap compris entre lesdites électrodes collectrice et de polarisation pour chaque chambre d'ionisation.

Dans un quatrième mode de réalisation de l'invention combiné avec un ou plusieurs modes de réalisation précédents, lesdites chambres d'ionisation présentent une différence au niveau de la pression et/ou de la température des fluides présents dans le gap compris entre lesdites électrodes collectrice et de polarisation pour chaque chambre d'ionisation.

Dans un cinquième mode de réalisation de l'invention combiné avec un ou plusieurs modes de réalisation précédents, lesdites chambres d'ionisation présentent une différence au niveau de la situation dans l'espace (géométrie et/ou localisation) des chambres d'ionisation par rapport à la position de la source, de manière à ce que le champ de faisceau entrant dans chacune des chambres d'ionisation diffère d'une chambre d'ionisation à l'autre.

Dans un sixième mode de réalisation de l'invention combiné avec un ou plusieurs modes de réalisation précédents, lesdites chambres d'ionisation sont séparées par un ou plusieurs absorbeurs d'énergie, de manière à ce que l'énergie de faisceau entrant dans chacune des chambres d'ionisation diffère d'une chambre d'ionisation à l'autre.

Un second aspect de l'invention concerne une méthode de mesure du débit de dose déposée par un faisceau de particules, basée sur l'utilisation du dispositif de dosimétrie décrit ci-dessus.

Selon la méthode de l'invention, on effectue les étapes suivantes, dans lesquelles :

(i) on utilise le dispositif selon l'une quelconque des revendications précédentes, pour lequel on choisit les paramètres intrinsèques et/ou extrinsèques de chacune des chambres d'ionisation considérées ;

(ii) on établit un facteur « gain » donné par l'équation : $G = \dfrac{1 - \left(\dfrac{i1}{i2}\right)_{norm}}{1 - f_1}$ où :

- G est le facteur « gain » relatif à la première chambre d'ionisation (IC1),

- $\left(\dfrac{i1}{i2}\right)_{norm}$ est le rapport de valeurs théoriques de signaux de sortie (i1 et i2) dans les deux chambres d'ionisation considérées (IC1 et IC2) normalisé par le rapport de leur facteur d'amplification respectifs (R1/R2), chaque facteur d'amplification dépendant dudit fluide, de la largeur dudit gap et du pouvoir de pénétration du faisceau de particules dans ledit fluide pour une chambre d'ionisation considérée,

- 1 - $f_1$ est la valeur théorique du facteur d'efficacité de collection de charges dans la première chambre d'ionisation (IC1),

lesdites valeurs théoriques de signaux de sortie (i1, i2) et f1 étant calculées en fonction des paramètres intrinsèques et/ou extrinsèques desdites chambres considérées (IC1 et IC2) choisis dans la première étape de la méthode ainsi qu'en fonction de la valeur de l'intensité de courant du faisceau de particules, ledit facteur gain étant indépendant de la valeur dudit courant du faisceau de particules,

(iii) on mesure le signal de sortie pour lesdites deux chambres d'ionisation considérées ;

(iv) on traite lesdits signaux à l'aide d'un calculateur effectuant un algorithme de détermination du facteur d'efficacité de collection de charges de ladite première chambre, sur base du facteur gain, suivi du calcul du débit de dose déposée par ledit faisceau.

De préférence, ledit calcul du débit de dose déposée par ledit faisceau de particules s'effectue selon les étapes suivantes :

(i) calcul du rapport normalisé $\left(\dfrac{i1}{i2}\right)_{norm}$ des signaux de sortie (i1 et i2) mesurés dans les deux chambres d'ionisation considérées (IC1 et IC2) ;

(ii) calcul du facteur d'efficacité f1 de collection de charges dans une première chambre d'ionisation sur base dudit facteur gain relatif à cette même chambre d'ionisation et sur base de la valeur du rapport normalisé $\left(\dfrac{i1}{i2}\right)_{norm}$ des signaux de sortie (i1 et i2) mesurés dans lesdites deux chambres d'ionisation considérées (IC1 et IC2) ;

(iii) calcul du débit de dose déposée par ledit faisceau sur base de la mesure du courant dans ladite première chambre d'ionisation et du facteur d'efficacité de collection de charges relatif à ladite première chambre d'ionisation (IC1).

Un troisième aspect de l'invention concerne l'utilisation de la méthode de mesure selon l'invention pour effectuer une mesure de débit de dose d'un faisceau énergétique de particules dont l'intensité de courant est supérieure à 1 nA.

BRÈVE DESCRIPTION DES FIGURES

La fig.1 représente un exemple de courbe de l'évolution de l'amplitude de l'impulsion électrique reçue par l'électrode collectrice en fonction de la différence de potentiel électrique entre l'électrode collectrice et l'électrode de polarisation d'un détecteur à gaz.

La fig. 2 représente un premier mode de réalisation de l'invention comprenant un dispositif comprenant au moins deux chambres d'ionisation.

La fig. 3 représente un deuxième mode de réalisation de l'invention comprenant un dispositif comprenant au moins deux chambres d'ionisation ayant une électrode commune.

La fig. 4 représente un graphique montrant l'évolution de l'efficacité de collection de charges dans deux chambres d'ionisation d'un dispositif de la présente invention, les chambres d'ionisation étant traversées par un même faisceau de protons de rayon gaussien σ égal à 5mm et d'énergie de 200MeV, ainsi que l'évolution du rapport des courants mesurés dans les deux chambres d'ionisation, en fonction du courant de faisceau, ledit dispositif comprenant deux chambres d'ionisation comprenant un gap différent.

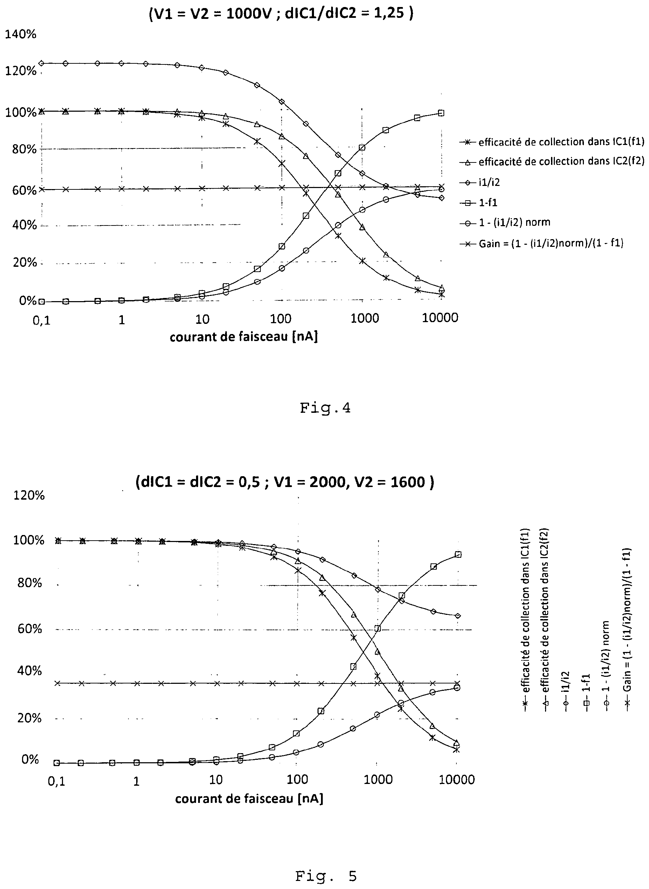

La fig. 5 représente un graphique montrant l'évolution de l'efficacité de collection de charges dans deux chambres d'ionisation d'un dispositif de la présente invention, en fonction du courant de faisceau, lesdites chambres d'ionisation comprenant un gap identique à l'intérieur duquel le champ électrique créé est différent d'une chambre d'ionisation à l'autre, les chambres d'ionisation étant traversées par un même faisceau de protons de rayon gaussien $\sigma$ égal à 5mm et d'énergie de 200MeV. Le graphique de la fig. 5 présente également l'évolution du rapport des courants mesurés dans les deux chambres d'ionisation en fonction du courant de faisceau.

La fig. 6 représente un graphique reprenant plusieurs courbes montrant la variation du facteur gain relatif à une chambre d'ionisation IC1, en fonction du rapport des gaps $d_{IC2}/d_{IC1}$ ainsi qu'en fonction du rapport des différences de potentiel $V_1/V_2$ entre les électrodes dans chaque chambre d'ionisation.

## DESCRIPTION DETAILLEE DE L'INVENTION

La présente invention vise à proposer une méthode et un dispositif de dosimétrie d'un faisceau de particules, permettant la mesure de l'efficacité de collection de charges dans une chambre d'ionisation. Le dispositif comprend au moins deux chambres d'ionisation comprenant chacune une électrode collectrice et une électrode de polarisation séparées par un gap.

La quantification de l'efficacité de collection de charges dans une chambre d'ionisation permet de calculer la dose d'un faisceau même si l'efficacité de collection de charges dans cette chambre d'ionisation n'est pas maximale. La dose déposée par un faisceau, exprimée en Gy est donnée par la formule (1) :

$$D = K \cdot \frac{Q}{R \cdot f} \qquad (1)$$

avec $Q = \int i_{coll}(t)$
et le débit de dose déposée par le faisceau exprimée en Gy/s est donné par les formules équivalentes (2) ou (3) :

$$\dot{D} = K \cdot \frac{i_{coll}}{R \cdot f} \qquad (2)$$

$$\dot{D} = K \cdot i_{faisc} \qquad (3)$$

- K est une constante de proportionnalité ;
- Q est la charge intégrée par unité de temps
- f est un facteur d'efficacité de collection de charges dans une chambre d'ionisation, exprimé en %.
- $i_{coll}$ est le courant collecté dans une chambre d'ionisation, exprimé en nA et donné par l'équation (4) :

$$i_{coll} = f \cdot i_{faisc} \cdot R \qquad (4)$$

- $i_{faisc}$ est l'intensité du courant de faisceau ;
- R, le facteur d'amplification de la chambre d'ionisation, donné par l'équation (5):

$$R = \frac{10^6 \cdot S \cdot \rho \cdot d}{W} \qquad (5)$$

où

- p est la masse volumique du fluide, généralement un gaz, compris dans la chambre d'ionisation, exprimée en g/cm$^3$ ;
- W est l'énergie dissipée par les paires d'ions formées, exprimée en eV ;
- d est l'épaisseur du gap séparant l'électrode collectrice et l'électrode de polarisation ;

- et S est le pouvoir d'arrêt du fluide compris dans la chambre d'ionisation, dépendant de l'énergie du faisceau et de la nature du fluide, S étant exprimé en MeV cm$^2$/g.

Selon la théorie de Boag (The dosimetry of ionizing radiation, vol II, chap. 3, Academic Press, Inc) le facteur d'efficacité de collection de charges f d'une chambre d'ionisation traversée par un faisceau de particules est donnée par l'équation (6) :

$$f = \frac{1}{1 + \xi^2} \qquad (6)$$

Où $\xi^2$ est donné par l'équation (7):

$$\xi^2 = \left( \frac{\alpha}{6 e k_1 k_2} \right) \cdot \frac{d^4}{V^2} \cdot Q_{max} \qquad (7)$$

où :

$\alpha$ est un coefficient de recombinaison caractéristique du gaz compris dans la chambre d'ionisation ;
e est la charge de l'électron (1,6 10$^{19}$C) ;
$k_1$ et $k_2$ sont les mobilités d'ions positifs et négatifs créés dans la chambre d'ionisation, k1 et k2 étant exprimées en m$^2$ s$^{-1}$ V$^{-1}$ (dans les exemples décrits plus bas, on effectue l'approximation $k_1 = k_2 = k$) ;
V est la différence de potentiel appliquée entre les électrodes collectrice et de polarisation, exprimée en V ;
et $D_{max}$ est la densité volumétrique d'ionisation donnée par l'équation (8) :

$$Q_{max} = \frac{D_{max} \cdot \rho}{W \cdot 10^6} \qquad (8)$$

où :

et Dmax est la dose maximale reçue par le faisceau dans la chambre d'ionisation, donnée par l'équation (9) :

$$D_{max} = J_{max} \cdot S \qquad (9)$$

où
$J_{max}$ est la densité de courant d'un faisceau de particules de rayon gaussien $\sigma$ traversant une chambre d'ionisation, exprimée en nA/cm$^2$ et donné par l'équation (10) :

$$J_{max} = \frac{i_{faisc}}{2 \pi \sigma^2} \qquad (10)$$

La présente invention repose sur l'utilisation d'au moins deux chambres d'ionisation traversées par un faisceau provenant d'une même source, lesdites chambres d'ionisation présentant des sensibilités différentes. Ces différences de sensibilité sont dues à une ou plusieurs différences de paramètres intrinsèques ou extrinsèques entre les chambres d'ionisation tels que :

- une différence au niveau de l'épaisseur du gap compris dans une chambre d'ionisation ;
- une différence au niveau du champ électrique appliqué dans une chambre d'ionisation ;
- une différence de la nature du fluide compris dans le gap d'une chambre d'ionisation ;
- une différence de pression du fluide compris dans le gap d'une chambre d'ionisation à l'autre ;
- une différence au niveau de l'énergie du faisceau entrant dans une chambre d'ionisation ;

- une différence au niveau de la taille ou de la forme du faisceau entrant d'une chambre d'ionisation à l'autre.

Ces différences entre chaque chambre d'ionisation ont pour conséquence des différences au niveau de la recombinaison de paires ion-électron lorsqu'un faisceau traverse chaque chambre d'ionisation et donc des comportements différents lorsque l'une des chambres d'ionisation fonctionne dans la zone Z1 dite de régime non saturé, où la recombinaison de charges est non négligeable. Lorsqu'il commence à y avoir de la recombinaison de charges dans l'une des chambres d'ionisation, grâce à la présente invention, il est possible de connaître le facteur d'efficacité de collection de charges dans cette chambre d'ionisation en comparant la valeur du courant mesuré dans cette chambre d'ionisation avec celle mesurée dans une autre chambre d'ionisation présentant au moins une différence avec la première chambre d'ionisation au niveau des paramètres décrits précédemment dans ce paragraphe.

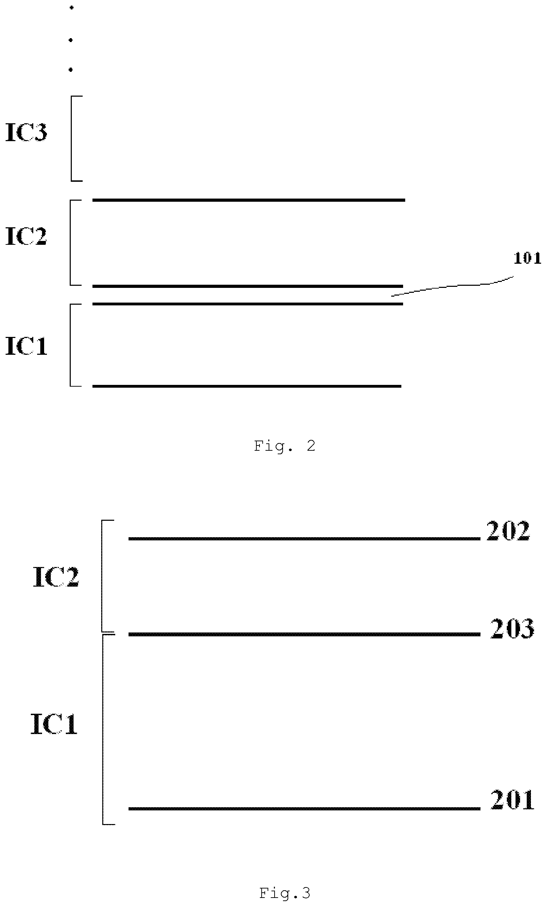

La fig.2 représente une réalisation possible de la présente invention comprenant au moins deux chambres d'ionisation parallèles planes IC1 et IC2 dont les plaques sont séparées par un milieu 101 isolant ou non et disposées l'une à la suite de l'autre de préférence de manière normale à l'axe du faisceau. La même invention peut être appliquée à un dispositif comprenant deux chambres d'ionisation cylindriques. Dans le cas ou le milieu 101 est un isolant galvanique, la place des électrodes collectrice et des électrodes de polarisation dans chacune des chambres d'ionisation n'a pas d'importance. Dans le cas ou le milieu 101 est un milieu conducteur électrique, il est préférable que l'électrode de polarisation d'une première chambre d'ionisation soit située en vis-à vis de l'électrode de polarisation d'une deuxième chambre d'ionisation.

Un second mode de réalisation de la présente invention est représenté sur la figure 3. Il s'agit d'un dispositif comprenant deux chambres d'ionisation IC1 et IC2 comprenant des plaques parallèles (201, 202, 203), dont l'épaisseur du gap entre les électrodes de la chambre d'ionisation IC2 est égale à 80% de l'épaisseur du gap entre les électrodes de la chambre d'ionisation IC1. Par exemple, ladite chambre d'ionisation IC1 peut comprendre un gap d'épaisseur $d_{IC1}$ égal à 5mm et ladite chambre d'ionisation IC2 peut comprendre un gap d'épaisseur $d_{IC2}$ égal à 4mm. Les deux chambres d'ionisation IC1 et IC2 ont une électrode de polarisation commune (203) et sont traversées par un faisceau de protons d'une énergie de 200 MeV et de diamètre gaussien de 10mm ($\sigma$ = 5mm). Les différents paramètres des chambres d'ionisation IC1 et IC2 sont repris respectivement dans les tableaux 1 et 2.

**Tableau 1 :**

| IC 1: | | | |
|---|---|---|---|
| W | W | 34,7 | eV |
| Densité de l'air | $\rho$ | 0,0013 | g/cm3 |
| Mobilité des ions dans l'air | k | 1,40E-04 | M2/s/V |
| Coefficient de recombinaison | $\alpha$ | 1,25E-12 | M3/s |
| Charge de l'électron | e | 1,60E-19 | C |
| | $\alpha$/6ekk | 6,64E+13 | V2s/C/m |
| | | 6,643E+11 | V2/A/cm |
| | | 664,32823 | V2/nA/cm |
| Épaisseur du gap | $d_{IC1}$ | 0,5 | cm |
| Différence de potentiel | $V_1$ | 1000 | V |
| Champ électrique | $E_1$ | 2000 | V/cm |
| Temps de migration | Tcol | 179 | $\mu$s |
| Energie du faisceau | E | 200 | MeV |
| Pouvoir d'arrêt dans l'air | Sair | 4,00 | MeVcm2/g |
| Facteur d'amplification de la chambre | R1 | 75 | - |
| Rayon gaussien du faisceau | $\sigma$ | 0,5 | cm |

**Tableau 2 :**

| IC 2: | | | |
|---|---|---|---|
| W | W | 34,7 | eV |
| Densité de l'air | $\rho$ | 0,0013 | g/cm3 |
| Mobilité des ions dans l'air | k | 1,40E-04 | M2/s/V |
| Coefficient de recombinaison | $\alpha$ | 1,25E-12 | M3/s |
| | e | 1,60E-19 | C |
| | $\alpha/6ekk$ | 6,64E+13 | V2s/C/m |
| | | 6,643E+11 | V2/A/cm |
| | | 664,32823 | V2/nA/cm |
| Épaisseur du gap | $d_{IC2}$ | 0,40 | cm |
| Différence de potentiel | $V_2$ | 1000 | V |
| Champ électrique | $E_2$ | 2500 | V/cm |
| Temps de migration | Tcol | 114 | $\mu$s |
| Energie du faisceau | E | 200 | MeV |
| Pouvoir d'arrêt dans l'air | Sair | 4,00 | MeVcm2/g |
| Facteur d'amplification de la chambre | R2 | 60 | - |
| Rayon gaussien du faisceau | $\sigma$ | 0,5 | cm |

Le tableau 3 reprend pour la chambre d'ionisation IC1 les différentes valeurs de Jmax, Dmax, Qmax, $\xi^2$, f et $i_{coll}$ calculés sur base de $i_{faisc}$ et des équations (4) à (10). Dans la suite du texte, pour la chambre d'ionisation IC1, les paramètres f et $i_{coll}$ seront appelés respectivement $f_1$ et $i_1$.

**Tableau 3 :**

| $i_{faisc}$ | Jmax | Dmax | Qmax | $\xi^2$ | $f_1$ | $i_1$ |
|---|---|---|---|---|---|---|
| (nA) | (nA/cm2) | (Gy/sec) | (nA/cm3) | | | (nA) |
| | | | | | | |
| 0,1 | 0,1 | 0,3 | 9,5 | 0,000 | 99,96% | 7,450 |
| 0,2 | 0,1 | 0,5 | 19,0 | 0,001 | 99,92% | 15 |
| 0,5 | 0,3 | 1,3 | 47,4 | 0,002 | 99,80% | 37 |
| 1 | 0,6 | 2,5 | 94,9 | 0,004 | 99,61% | 74 |
| 2 | 1,3 | 5,1 | 189,8 | 0,008 | 99,22% | 148 |
| 5 | 3,2 | 12,7 | 474,4 | 0,020 | 98,07% | 365 |
| 10 | 6,4 | 25,5 | 948,9 | 0,039 | 96,21% | 717 |
| 20 | 12,7 | 50,9 | 1897,8 | 0,079 | 92,70% | 1382 |
| 50 | 31,8 | 127,3 | 4744,4 | 0,197 | 83,54% | 3113 |
| 100 | 63,7 | 254,6 | 9488,8 | 0,394 | 71,74% | 5346 |
| 200 | 127,3 | 509,3 | 18977,5 | 0,788 | 55,93% | 8336 |
| 500 | 318,3 | 1273,2 | 47443,8 | 1,970 | 33,67% | 12547 |
| 1000 | 636,6 | 2546,5 | 94887,5 | 3, 940 | 20,24% | 15087 |
| 2000 | 1273,2 | 5093,0 | 189775,1 | 7,880 | 11,26% | 16786 |
| 5000 | 3183,1 | 12732,4 | 474437,7 | 19,699 | 4,83% | 18002 |

(suite)

| $i_{faisc}$ | Jmax | Dmax | Qmax | $\xi^2$ | $f_1$ | $i_1$ |
|---|---|---|---|---|---|---|
| (nA) | (nA/cm2) | (Gy/sec) | (nA/cm3) | | | (nA) |
| | | | | | | |
| 10000 | 6366,2 | 25464,8 | 948875,3 | 39,398 | 2,48% | 18448 |

Le tableau 4 reprend pour la chambre d'ionisation IC2 les différentes valeurs de Jmax, Dmax, Qmax, $\xi^2$, f et $i_{coll}$, calculés sur base de $i_{faisc}$ et des équations (4) à (10). Dans la suite du texte, pour la chambre d'ionisation IC2, les paramètres f et $i_{coll}$ seront appelés respectivement $f_2$ et $i_2$.

**Tableau 4 :**

| $i_{faisc}$ | Jmax | Dmax | Qmax | $\xi^2$ | $f_2$ | $i_2$ |
|---|---|---|---|---|---|---|
| (nA) | (nA/cm2) | (Gy/sec) | (nA/cm3) | | | (nA) |
| | | | | | | |
| 0,1 | 0,1 | 0,3 | 9,5 | 0,000 | 99,98% | 5,961 |
| 0,2 | 0,1 | 0,5 | 19,0 | 0,000 | 99,97% | 12 |
| 0,5 | 0,3 | 1,3 | 47,4 | 0,001 | 99,92% | 30 |
| 1 | 0,6 | 2,5 | 94,9 | 0,002 | 99,84% | 60 |
| 2 | 1,3 | 5,1 | 189,8 | 0,003 | 99,68% | 119 |
| 5 | 3,2 | 12,7 | 474,4 | 0,008 | 99,20% | 296 |
| 10 | 6,4 | 25,5 | 948,9 | 0,016 | 98,41% | 587 |
| 20 | 12,7 | 50,9 | 1897,8 | 0,032 | 96,87% | 1155 |
| 50 | 31,8 | 127,3 | 4744,4 | 0,081 | 92,53% | 2758 |
| 100 | 63,7 | 254,6 | 9488,8 | 0,161 | 86,10% | 5134 |
| 200 | 127,3 | 509,3 | 18977,5 | 0,323 | 75,60% | 9015 |
| 500 | 318,3 | 1273,2 | 47443,8 | 0,807 | 55,34% | 16498 |
| 1000 | 636,6 | 2546,5 | 94887,5 | 1,614 | 38,26% | 22810 |
| 2000 | 1273,2 | 5093,0 | 189775,1 | 3,227 | 23,65% | 28206 |
| 5000 | 3183,1 | 12732,4 | 474437,7 | 8,069 | 11,03% | 32871 |
| 10000 | 6366,2 | 25464,8 | 948875,3 | 16,137 | 5,84% | 34789 |

On constate que dans le cas de ce premier mode de réalisation de l'invention, en fonction de $i_{faisc}$, la chambre d'ionisation IC1 présente un taux de recombinaison de charges plus important que dans la chambre d'ionisation IC2. Cet effet peut se comprendre par la théorie de Boag selon laquelle la probabilité de recombinaison de charges dans une chambre d'ionisation ayant un gap d'épaisseur d et dans laquelle on applique une différence de potentiel V entre deux électrodes d'une chambre d'ionisation, est principalement proportionnelle au rapport $d^4/V^2$.

Connaissant les valeurs théoriques de $f_1$, $f_2$, $i_1$, $i_2$, et ayant fixé les épaisseurs de gap $d_{IC1}$ et $d_{IC2}$, on introduit un facteur nommé facteur « gain » G, par exemple relatif à la chambre d'ionisation IC1 et donné par les équations (11) et (12) :

$$G = \frac{1 - \left(\dfrac{i_1}{i_2}\right)_{norm}}{1 - f_1} \qquad (11)$$

où

$$\left(\frac{i_1}{i_2}\right)_{norm} = \frac{\left(\dfrac{i_1}{i_2}\right)}{\left(\dfrac{R_{IC1}}{R_{IC2}}\right)} \qquad (12)$$

avec $R_{IC1}$ et $R_{IC2}$, les facteurs d'amplification respectivement des chambres d'ionisation IC1 et IC2 donnés par l'équation (5) ;

et (1-f1), le taux de recombinaison de charges dans la chambre d'ionisation IC1.

Le tableau 5 reprend pour différentes valeurs de rapports i1/i2, les valeurs théoriques du facteur « gain » G d'un dispositif comprenant deux chambres d'ionisation IC1 et IC2 dont le rapport des épaisseurs de gap $d_{IC1}/d_{IC2}$ est de 1,25. Le facteur gain est constant quelque soient les valeurs des rapports de courants mesurés $i_1/i_2$.

**Tableau 5 :**

| $i_{faisc}$ | i1/i2 | i1/i2 norm | 1-f1 | 1-(i₁/i₂)ₙₒᵣₘ | Gain= (1-(i₁/i₂)ₙₒᵣₘ) /(1-f₁) |
|---|---|---|---|---|---|
| **0,1** | 1,2497 | 99,98% | 0,04% | 0,02% | 59,04% |
| **0,2** | 1,2494 | 99,95% | 0,08% | 0,05% | 59,04% |
| **0,5** | 1,249 | 99,88% | 0,20% | 0,12% | 59,04% |
| **1** | 1,247 | 99,77% | 0,39% | 0,23% | 59,04% |
| **2** | 1,244 | 99,54% | 0,78% | 0,46% | 59,04% |
| **5** | 1,24 | 98,86% | 1,93% | 1,14% | 59,04% |
| **10** | 1,22 | 97,76% | 3,79% | 2,24% | 59,04% |
| **20** | 1,20 | 95,69% | 7,30% | 4,31% | 59,04% |
| **50** | 1,13 | 90,28% | 16,46% | 9,72% | 59,04% |
| **100** | 1,04 | 83,31% | 28,26% | 16,69% | 59,04% |
| **200** | 0, 92 | 73,98% | 44,07% | 26,02% | 59,04% |
| **500** | 0,76 | 60,84% | 66,33% | 39,16% | 59,04% |
| **1000** | 0, 66 | 52,91% | 79,76% | 47,09% | 59,04% |
| **2000** | 0, 60 | 47,61% | 88,74% | 52,39% | 59,04% |
| **5000** | 0,55 | 43,81% | 95,17% | 56,19% | 59,04% |
| **10000** | 0,53 | 42,42% | 97,52% | 57,58% | 59,04% |

Le facteur d'efficacité de collection de charges f d'une chambre d'ionisation, par exemple le facteur $f_1$ de la chambre d'ionisation IC1, peut être obtenu en vertu des équation (11) et (12), connaissant la valeur du facteur « gain » relative à la chambre d'ionisation IC1, et grâce à la mesure du rapport des intensités de courant $i_1$ et $i_2$, mesurées respectivement à partir de l'électrode de collection (201) de la chambre d'ionisation IC1 et de l'électrode de collection (202) de la chambre d'ionisation IC2. Par exemple, pour un dispositif du présent mode de réalisation dont l'électrode de polarisation (203) est mise à une tension de 1000V, si la valeur mesurée du rapport $i_1/i_2$ est de 1.20, on peut calculer le facteur d'efficacité de collection de charges $f_1$ pour la chambre d'ionisation IC1 à l'aide des équations (11) et (12) :

$$1 - f_1 = \frac{1 - \left(\dfrac{\frac{1.20}{75}}{60}\right)}{0.5904} = 0.073 . \quad \text{D'où f1 = 0.927.}$$

Connaissant le courant mesuré $i_1$, le facteur d'amplification $R_1$ de la chambre d'ionisation IC1 et le facteur d'efficacité de collection de charges de la chambre d'ionisation IC1, on peut calculer sur base de l'équation (4) la valeur du courant de faisceau $i_{faisc}$, et ainsi connaitre le débit de dose déposé par le faisceau sur base de l'équation (3) :

$$i_{faisc} = \frac{1382nA}{75 \cdot 0.927} \approx 20nA \qquad (4)$$

$$\dot{D} \approx K \cdot 20 \quad \text{Gy/s} \qquad (3)$$

Dans ce cas, en tenant compte du facteur d'efficacité de collection de charges pour la chambre d'ionisation IC1, la valeur vraie du courant de faisceau est de 20nA.

Cette situation est représentée sur le graphique de la figure 4 reprenant différentes courbes :

- le facteur d'efficacité de collection de charges dans la chambre d'ionisation IC1, représentée par la courbe $f_1$,
- le facteur d'efficacité de collection de charges dans la chambre d'ionisation IC2 représenté par la courbe $f_2$,
- le rapport des courants mesurés $i_1/i_2$
- le taux de recombinaison de charges $(1-f_1)$ de la chambre d'ionisation IC1

- la courbe $1 - \left(\dfrac{i_1}{i_2}\right)_{norm}$

- le facteur « gain » G donné par l'équation (11)

L'avantage d'utiliser un dispositif comprenant deux chambres d'ionisation ne présentant des différences qu'au niveau des épaisseur de gaps compris dans chaque chambre d'ionisation, et dont l'électrode de polarisation est commune aux deux chambres d'ionisation, est que le facteur « gain » ne dépend que de la géométrie de la chambre. Par exemple, si l'on change le potentiel électrique de l'électrode de polarisation commune aux deux chambres d'ionisation, bien que la valeur de courants mesurés et le rapport de ces courants mesurés $i_1/i_2$ varieront, le facteur gain reste constant et la variation du rapport $i_1/i_2$ est contrebalancée par la variation du facteur d'efficacité de collection de charges dans chaque chambre d'ionisation. Par exemple, si l'électrode de polarisation est placée à un potentiel de 2000V, pour un courant de faisceau de 20nA, la valeur du rapport mesurée du rapport $i_1/i_2$ sera de 1.236 avec un facteur de collection de charges f1 égal à 0.981. La valeur mesurée de $i_1$ étant égale à 1462nA, $i_{faisc}$ est de 1462/(75 · 0.981) ≈ 20nA et le débit de dose déposé par le faisceau de ≈ K.20 comme dans le cas du premier exemple où la tension de l'électrode de polarisation était de 1000V. Le même raisonnement s'applique pour une variation identique dans les deux chambres d'ionisation de :

- la pression sur le fluide compris dans chaque chambre d'ionisation;

- la nature du fluide compris dans chaque chambre d'ionisation;

- la taille du faisceau ;

- l'énergie du faisceau.

En d'autres termes, dans le calcul du débit de dose déposée par le faisceau, s'il y a de manière identique dans chaque chambre d'ionisation une variation du champ électrique, de la pression, de la nature du fluide ou de la taille du faisceau, la variation du rapport des courants mesurés à partir des électrodes collectrice des chambres d'ionisation est contrebalancée par la variation du facteur d'efficacité de collection de charges. Le dispositif de la présente invention fournira toujours une mesure exacte de la dose du faisceau, pourvu que ces variations soient connues de l'homme du métier pour pouvoir être appliquées au bon fonctionnement d'une chambre d'ionisation.

Différents facteurs « gains » peuvent être obtenus selon les épaisseurs de gaps choisies. Dans l'exemple décrit plus haut, avec un faisceau de 200 MeV, de distribution gaussienne de 5mm ($1\sigma$) et avec un rapport des épaisseurs de gaps $d_{IC2}/d_{IC1}$ égal à 80%, on obtient un facteur « gain » de 59%. Il est préférable que le facteur de gain soit élevé de manière à obtenir des différences de courant significatives entre deux chambres d'ionisation et d'évaluer avec précision le facteur d'efficacité de collection de charges dans une des chambres d'ionisation, et donc de pouvoir déterminer le débit de dose déposée par le faisceau. Comme discuté précédemment, dans le présent mode de réalisation de l'invention, le facteur « gain » ne dépend que du rapport entre les épaisseurs des gaps.

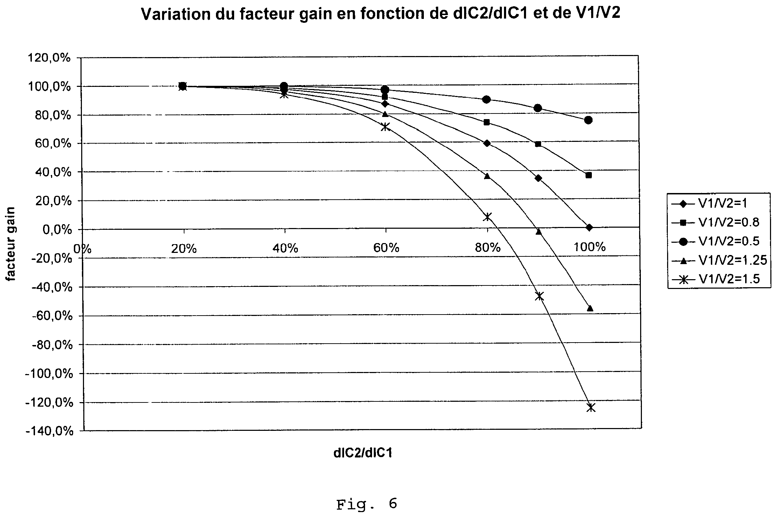

La figure 6 présente une courbe montrant l'évolution du facteur « gain » relatif à une chambre d'ionisation IC1, pour un dispositif comprenant deux chambres d'ionisation à l'intérieur desquelles les différences de potentiel dans les deux chambres d'ionisation sont identiques ($V_1=V_2$), en fonction du rapport entre les épaisseurs des gaps $d_{IC2}/d_{IC1}$. Plus ce rapport diminue, plus le gain est élevé et tend vers 100%. Il est donc avantageux de travailler avec un dispositif comprenant au moins deux chambres d'ionisation dont les épaisseurs de gaps sont différentes. L'homme de l'art reconnaîtra qu'un risque de production d'arc électrique existera pour une chambre d'ionisation ayant un gap trop faible et qu'une telle chambre d'ionisation comprise dans le dispositif de la présente invention sera de ce fait inappropriée. De même un gap trop élevé aura pour conséquence d'augmenter le risque de recombinaisons de charges.

Comme le montre le tableau 6, la variation du rapport (i1/i2)norm par rapport à sa valeur correspondant à une valeur de courant de faisceau tendant vers 0 devient significative (c'est-à-dire supérieure à 1%) dans la tranche des valeurs de courants de faisceau compris entre 1 et 100 nA pour des différences de facteurs d'efficacité de collection de charge supérieures à 0.05% pour deux chambres traversées par un courant de faisceau supérieur à 1 nA.

**Tableau 6 :**

| $i_{faisc}$ | $d_{IC1}$ = 0.5cm<br>$f_1$ | $d_{IC2}$= 0.48cm<br>$f_2$ | $\Delta f$ | $(i_1/i_2)$norm | variation de $(i_1/i_2)$ norm par rapport à sa valeur pour $i_{faisc}$ = 0.1 |
|---|---|---|---|---|---|
| 0,1 | 99,96% | 99,97% | 0,01% | 99,99% | 0,00% |
| 0,2 | 99,92% | 99,93% | 0,01% | 99,99% | 0,01% |
| 0,5 | 99,80% | 99,83% | 0,03% | 99,97% | 0,02% |
| 1 | 99,61% | 99,67% | **0,06%** | 99,94% | 0,05% |
| 2 | 99,22% | 99,34% | 0,12% | 99,88% | 0,11% |
| 5 | 98,07% | 98,35% | 0,29% | 99,71% | 0,29% |
| 10 | 96,21% | 96,76% | 0,57% | 99,43% | 0,57% |
| 20 | 92,70% | 93,73% | 1,11% | 98,90% | **1,09%** |
| 50 | 83,54% | 85,67% | 2,54% | 97,52% | 2,47% |
| 100 | 71,74% | 74,93% | 4,45% | 95,74% | 4,25% |
| 200 | 55,93% | 59,91% | 7,11% | 93,36% | 6,63% |
| 500 | 33,67% | 37,41% | 11,10% | 90,01% | 9,99% |
| 1000 | 20,24% | 23,01% | 13,66% | 87,98% | 12,01% |
| 2000 | 11,26% | 13,00% | 15,43% | 86,63% | 13,36% |
| 5000 | 4,83% | 5,64% | 16,74% | 85,66% | 14,33% |
| 10000 | 2,48% | 2,90% | 17,22% | 85,31% | 14,69% |

Un autre mode de réalisation de la présente invention est un dispositif comprenant deux chambres d'ionisation dont un paramètre autre que l'épaisseur du gap entre les deux électrodes collectrice et de polarisation est différente d'une chambre d'ionisation à l'autre. Par exemple, il est possible d'appliquer des différences de potentiel différentes entre les électrodes de chaque chambre d'ionisation, et de mesurer et comparer le courant dans lesdites chambres d'ionisation afin d'avoir accès à l'efficacité de collection de charges relative à une chambre d'ionisation et au débit de dose déposé par le faisceau.

Un exemple de dispositif selon ce mode de réalisation comprend deux chambres d'ionisation de gaps identiques, les électrodes de la première chambre d'ionisation IC1 soumises à une différence de potentiel $V_1$ de 1600 Volts tandis que les électrodes de la deuxième chambre d'ionisation sont soumises à une différence de potentiel $V_2$ de 2000 Volts. Les deux chambres d'ionisation ont par exemple un gap de 5mm d'épaisseur, une électrode commune ou non et sont traversées par un faisceau de protons d'une énergie de 200 MeV, de diamètre gaussien de 10mm ($\sigma$ = 5mm). Une intensité de courant $i_1$ est mesurée dans la chambre d'ionisation IC1 et une intensité de courant $i_2$ est mesurée dans la chambre d'ionisation IC2. Dans le présent exemple, en fonction de la croissance de l'intensité du courant de faisceau, la première chambre qui commence à présenter des phénomènes de recombinaison de charges est la chambre IC1. En effet, selon la théorie de Boag, la probabilité de recombinaison de charges dans une chambre d'ionisation ayant un gap d'épaisseur d et soumise à un potentiel électrique V, est proportionnelle au rapport $d^4/V^2$. On peut calculer un facteur « gain » relatif à la chambre d'ionisation IC1 de 36% dans le cas du présent exemple, le facteur « gain » étant uniquement dépendant des différences de potentiel entre les électrodes de chaque chambre d'ionisation, pour autant que les autres paramètres tels que le gap, la pression et la nature du fluide dans ce gap soient constants d'une chambre d'ionisation à l'autre. Cette situation est représentée sur le graphique de la fig.5.

De la même manière que dans le mode de réalisation de l'invention précédent, le facteur de gain relatif à une chambre d'ionisation étant fixe, le rapport des courants $i_1/i_2$ mesuré permet de déduire le facteur d'efficacité de collection de charges dans cette même chambre d'ionisation et de là, la dose déposée dans cette même chambre d'ionisation.

Dans ce présent mode de réalisation de l'invention, le facteur « gain » étant inférieur à celui obtenu dans le cas du mode de réalisation précédent, la variation du rapport des courants mesurés $i_1/i_2$ est plus faible et par conséquent, la sensibilité de la mesure du débit de dose déposée par le faisceau s'en trouve diminuée. De plus, le facteur « gain » ne dépendant ici que des différences de potentiels appliquées dans chaque chambre d'ionisation, un moyen de contrôle du champ électrique appliqué dans chaque chambre d'ionisation est donc nécessaire.

Un autre mode de réalisation de l'invention est un dispositif comprenant deux chambres d'ionisation, chacune comprenant une épaisseur de gap qui lui est propre et dans lesquelles les différences de potentiel entre les électrodes sont différentes, afin d'obtenir un facteur « gain » optimal. Le graphique de la figure 6 reprend plusieurs courbes montrant la variation du facteur gain relatif à une chambre d'ionisation IC1 en fonction du rapport des gaps $d_{IC2}/d_{IC1}$ ainsi qu'en fonction du rapport des différences de potentiel $V_1/V_2$ entre les électrodes de chaque chambre d'ionisation IC1 et IC2. On constate que le facteur gain est avantageusement plus élevé lorsque le rapport $d_{IC1}/d_{IC2}$ est supérieur à 1 et que de manière simultanée, le rapport des différences de potentiel $V_1/V_2$ entre les électrodes de chaque chambre d'ionisation est inférieur à 1. L'homme du métier reconnaîtra néanmoins des valeurs extrêmes de gaps $d_{IC1}$ et $d_{IC2}$ ainsi que des valeurs extrêmes de différences de potentiel $V_1$ et $V_2$ entre les électrodes de chaque chambre d'ionisation IC1 et IC2, au-delà desquelles des phénomènes d'arcs ou des problèmes de précision de la mesure du courant de faisceau surviennent. Il est également possible de travailler dans des conditions inverses, avec des rapports $d_{IC1}/d_{IC2}$ inférieurs à 1 et des valeurs $V_1/V_2$ supérieures à 1, dans ce cas le rapport i1/i2 est supérieur au rapport $R_1/R_2$ et le facteur « gain » prend des valeurs allant de 0 à -∞, ce qui dans l'absolu ne change rien à la précision de la détermination de l'efficacité de collection de charges et du débit de dose déposée par le faisceau.

Un autre mode de réalisation de l'invention est un dispositif comprenant au moins deux chambres d'ionisation, comprenant chacune un gap, identique ou non, dans lesquelles les différences de potentiel entre électrodes sont différentes ou non et comprenant chacune un fluide dont la nature diffère d'une chambre d'ionisation à l'autre comme par exemple :

- un gaz dans une chambre d'ionisation et un liquide dans une autre chambre d'ionisation;
- un premier gaz dans une chambre d'ionisation et un second gaz de nature différente dans une autre chambre d'ionisation ;
- des fluides soumis à des pressions différentes.

Les paramètres S (pouvoir d'arrêt du fluide), $\rho$ (masse volumique du fluide) et W (Energie dissipée par les paires d'ions formés) de l'équation (9) dépendent à la fois de la nature du fluide et de la pression à laquelle se trouve ce fluide. De manière analogue aux situations décrites précédemment, il est possible de calculer un facteur gain sur base des paramètres S, $\rho$ et W de chaque chambre d'ionisation. On peut donc choisir un fluide $M_1$ de pression $P_1$ ayant comme paramètres $S_1$, $\rho_1$ et $W_1$ et un fluide $M_2$ de pression $P_2$ ayant comme paramètres $S_2$, $\rho_2$ et $W_2$, M1 pouvant être différent ou égal à M2, P1 pouvant être différent ou égal à P2, et calculer un facteur gain à l'aide des formules (3) à (11). Les fluides M1 et M2 seront compris dans l'une ou l'autre chambre d'ionisation, de telle manière à obtenir un facteur « gain » élevé. De manière analogue aux modes de réalisation décrits précédemment, connaissant le facteur « gain »,

le rapport R$_1$/R$_2$, et ayant mesuré le rapport des courants dans chaque chambre d'ionisation, on détermine le facteur d'efficacité de collection de charges relatif à une chambre d'ionisation et on en déduit à l'aide de la formule (2) le débit de dose déposée par le faisceau. Si les fluides présents dans les gaps se trouvent à des pressions différentes d'une chambre d'ionisation à l'autre, un moyen de contrôle de la pression est nécessaire.

Un autre mode de réalisation de l'invention est un dispositif comprenant deux chambres d'ionisation et un absorbeur d'énergie dont on connait le pouvoir d'arrêt S, l'absorbeur d'énergie étant placé entre les deux chambres d'ionisation, de manière à obtenir une énergie du faisceau différente d'une chambre d'ionisation à l'autre et donc un courant mesuré différent.

Un autre mode de réalisation de l'invention possible est un dispositif dont au moins deux chambres d'ionisation sont espacées l'une de l'autre de manière à avoir une taille ou une forme de faisceau entrant dans chaque chambre d'ionisation différent et donc des différences au niveau de la densité de courant mesuré ainsi qu'au niveau de l'efficacité de collection de charges d'une chambre d'ionisation à l'autre. Cela implique de pouvoir connaitre en même temps l'élargissement du faisceau pour le calcul du facteur gain, ce qui peut être réalisé par exemple à l'aide d'une chambre d'ionisation constituée de pixels. Néanmoins, dans ce mode de réalisation, les différences de courants mesurés entre deux chambres d'ionisation sont moins significatives que dans les modes de réalisation précédents.

Un dispositif combinant une ou plusieurs différences entre chaque chambre d'ionisation telles que reprises dans les modes de réalisation décrits précédemment ou également d'autres différences connues de l'homme de l'art peut être réalisé de manière à obtenir un facteur gain optimal, de préférence le plus élevé possible et une différence significative de courant mesuré entre chaque chambre d'ionisation permettant ainsi de connaitre le facteur d'efficacité de collection de charges d'une chambre d'ionisation et de déterminer le débit de dose déposés par un faisceau, de préférence de la manière la plus précise possible.

Les modes de réalisation de la présente invention ont été décrits pour des utilisations de contrôle de dose de faisceau de protons, mais la présente invention peut également s'appliquer à tout autre type de faisceau ionisant.

Enfin, le dispositif de la présente invention est relié à un dispositif d'acquisition envoyant l'information à un système effectuant un algorithme dont les étapes sont :

- la comparaison des différences de courant ou de courants intégrés dans deux chambres d'ionisation du dispositif, plus particulièrement le rapport des courants mesurés i$_1$/i$_2$;
- le calcul du taux de recombinaison de charges (1-f) et de là le facteur d'efficacité de collection de charges f dans une chambre d'ionisation considérée sur base du résultat de la première étape de l'algorithme et sur base d'un facteur « gain » de la chambre d'ionisation considérée, le facteur « gain » étant fixé sur base des paramètres intrinsèques (épaisseur du gap, différences de potentiels entre électrodes de chaque chambre d'ionisation, nature et pression du fluide compris dans les chambres d'ionisation) et extrinsèques (taille du faisceau entrant dans les chambres d'ionisation) des chambres d'ionisation du dispositif;
- le calcul du débit de dose déposée par le faisceau sur base du facteur d'efficacité de collection de charges dans la chambre d'ionisation considérée.

Le dispositif de la présente invention a pour avantage de pouvoir évaluer le taux de recombinaison de charges et le facteur d'efficacité de collection de charges dans une chambre d'ionisation et de connaitre ainsi le débit de dose déposée par un faisceau dans des conditions où l'intensité du faisceau est telle qu'une chambre d'ionisation classique présente des phénomènes de recombinaison. Le fait de pouvoir avoir accès directement au facteur d'efficacité de collection de charges permet de contrôler précisément le débit de doses déposées par des faisceaux intenses en énergie, c'est-à-dire dans des conditions qui ne seraient pas mesurables avec des chambres d'ionisation classiques. Le dispositif de la présente invention est donc capable d'utiliser des chambres d'ionisation sur une très large gamme de courants de faisceau par rapport aux techniques connues de l'art antérieur.

## Revendications

1. Dispositif de dosimétrie d'un faisceau énergétique de particules provenant d'une source et comprenant au moins une première et une deuxième chambres d'ionisation (IC1 et IC2) comprenant chacune une électrode collectrice et une électrode de polarisation, lesdites électrodes de chaque chambre d'ionisation considérée étant séparées par un gap ou espace comprenant un fluide, lesdites deux chambres d'ionisation étant configurées pour être traversées par un faisceau de particules provenant d'une même source, lesdites deux chambres d'ionisation présentant des facteurs d'efficacité de collection de charges différents, ledit dispositif étant **caractérisé en ce qu'**il comprend un dispositif d'acquisition relié à un calculateur effectuant un premier algorithme de calcul

- d'un facteur « gain » relatif à une première chambre d'ionisation, donné par l'équation :

$$G = \frac{1 - (\frac{i_1}{i_2})_{norm}}{1 - f_1}$$

où

- G est le facteur « gain » relatif à la première chambre d'ionisation (IC1),

- $(\frac{i_1}{i_2})_{norm}$ est le rapport de valeurs théoriques de signaux de sortie (i1 et i2) dans lesdites deux chambres d'ionisation (IC1 et IC2) normalisé par le rapport de leur facteur d'amplification respectifs (R1/R2), chaque facteur d'amplification dépendant dudit fluide, de la largeur dudit gap ou espace et du pouvoir de pénétration du faisceau de particules dans ledit fluide pour la première chambre d'ionisation (IC1),
- f1 est la valeur théorique du facteur d'efficacité de collection de charges dans la première chambre d'ionisation (IC1),

lesdites valeurs théoriques de signaux de sortie (i1, i2) et f1 étant calculées en fonction de paramètres intrinsèques et/ou extrinsèques desdites deux chambres considérées (IC1 et IC2), ainsi qu'en fonction de la valeur de l'intensité de courant du faisceau de particules, ledit facteur gain étant indépendant de la valeur dudit courant du faisceau de particules, ledit calculateur effectuant un deuxième algorithme de calcul du débit de dose déposé par le faisceau de particules comprenant les étapes suivantes :

- mesure des signaux de sortie (i1 et i2) dans lesdites deux chambres d'ionisation et établissement du rapport normalisé $(\frac{i_1}{i_2})_{norm}$ entre lesdites valeurs de signaux de sortie (i1 et i2) ;
- calcul du taux de recombinaison de charges (1-f1) et déduction du facteur d'efficacité de collection de charges (f1) dans la première chambre d'ionisation (IC1) sur base du résultat du premier algorithme et sur base de la connaissance du facteur « gain » de la première chambre d'ionisation ;
- calcul du débit de dose déposée par le faisceau sur base du facteur d'efficacité de collection de charges (f1) dans la première chambre d'ionisation.

2. Dispositif selon la revendication 1, **caractérisé en ce que** lesdites deux chambres d'ionisation présentent une différence au niveau des épaisseurs de gap ou espace compris entre lesdites électrodes collectrice et de polarisation, conférant une différence de facteur d'efficacité de collection de charges.

3. Dispositif selon la revendication 1 ou 2, **caractérisé en ce que** lesdites deux chambres d'ionisation présentent une différence au niveau des champs électriques créés dans chacun des gaps ou espaces compris entre lesdites électrodes collectrice et de polarisation, conférant une différence de facteur d'efficacité de collection de charges.

4. Dispositif selon l'une quelconque des revendications précédentes, **caractérisé en ce que** lesdites deux chambres d'ionisation présentent une différence au niveau de la nature des fluides présents dans chacun des gaps ou espaces compris entre lesdites électrodes collectrice et de polarisation, conférant une différence de facteur d'efficacité de collection de charges.

5. Dispositif selon l'une quelconque des revendications précédentes, **caractérisé en ce que** lesdites deux chambres d'ionisation présentent une différence au niveau de la pression et/ou de la température du fluide présent dans chacun des gaps ou espaces compris entre lesdites électrodes collectrice et de polarisation, conférant une différence de facteur d'efficacité de collection de charges.

6. Dispositif selon l'une quelconque des revendications précédentes, **caractérisé en ce que** lesdites deux chambres d'ionisation présentent une différence au niveau de leur géométrie et/ou leur localisation de manière à ce que le champ de faisceau entrant dans chacune desdites deux chambres d'ionisation diffère d'une chambre d'ionisation à l'autre, conférant une différence de facteur d'efficacité de collection de charges.

7. Dispositif selon l'une quelconque des revendications précédentes, **caractérisé en ce que** lesdites deux chambres d'ionisation sont séparées par un ou plusieurs absorbeurs d'énergie, de manière à ce que l'énergie de faisceau entrant dans chacune desdites deux chambres d'ionisation diffère d'une chambre d'ionisation à l'autre, conférant une différence de facteur d'efficacité de collection de charges.

**8.** Méthode de mesure du débit de dose déposée par un faisceau énergétique de particules provenant d'une source, **caractérisée en ce que** l'on effectue les étapes suivantes :

(i) on utilise le dispositif selon l'une quelconque des revendications précédentes, pour lequel on choisit les paramètres intrinsèques et/ou extrinsèques de chacune desdites deuxchambres d'ionisation ;
(ii) on établit un facteur « gain » donné par l'équation : $G = (1-(i_1/i_2)_{norm})/(1-f_1)$ où

- G est le facteur « gain » relatif à la première chambre d'ionisation (IC1),

- $(\frac{i_1}{i_2})_{norm}$ est le rapport de valeurs théoriques de signaux de sortie (i1 et i2) dans lesdites deux chambres d'ionisation (IC1 et IC2) normalisé par le rapport de leur facteur d'amplification respectifs (R1/R2), chaque facteur d'amplification dépendant dudit fluide, de la largeur dudit gap ou espace et du pouvoir de pénétration du faisceau de particules dans ledit fluide pour la première chambre d'ionisation,
- f1 est la valeur théorique du facteur d'efficacité de collection de charges dans la première chambre d'ionisation (ICI),

lesdites valeurs théoriques de signaux de sortie (i1, i2) et f1 étant calculées en fonction des paramètres intrinsèques et/ou extrinsèques desdites deux chambres (IC1 et IC2) choisis dans la première étape de la méthode ainsi qu'en fonction d'une valeur prédéterminée de l'intensité de courant du faisceau de particules, ledit facteur gain étant indépendant de la valeur dudit courant du faisceau de particules ;
(iii) on mesure le signal de sortie pour lesdites deux chambres d'ionisation ;
(iv) on traite lesdits signaux à l'aide d'un calculateur effectuant un algorithme de détermination du facteur d'efficacité de collection de charges de ladite première chambre, sur base du facteur gain, suivi du calcul du débit de dose déposée par ledit faisceau.

**9.** Méthode de mesure du débit de dose déposée par un faisceau énergétique de particules selon la revendication 8, **caractérisée en ce que** le calcul du débit de dose déposée par ledit faisceau s'effectue selon les étapes suivantes :

(i) calcul du rapport normalisé $(\frac{i_1}{i_2})_{norm.}$ des signaux de sortie (i1 et i2) mesurés dans lesdites deux chambres d'ionisation (IC1 et IC2) ;
(ii) calcul du facteur d'efficacité f1 de collection de charges dans une première chambre d'ionisation sur base dudit facteur gain relatif à cette même chambre d'ionisation et sur base de la valeur du rapport normalisé

$(\frac{i_1}{i_2})_{norm}$ des signaux de sortie (i1 et i2) mesurés dans lesdites deux chambres d'ionisation (IC1 et IC2) ;

(iii) calcul du débit de dose déposée par ledit faisceau sur base de la mesure du courant dans ladite première chambre d'ionisation et du facteur d'efficacité de collection de charges relatif à ladite première chambre d'ionisation (IC1).

**10.** Utilisation de la méthode de mesure selon les revendications 8 ou 9 pour effectuer une mesure de débit de dose d'un faisceau énergétique de particules dont l'intensité de courant est supérieure à 1 nA.

**Patentansprüche**

**1.** Dosimetrievorrichtung eines Partikelenergiestrahls aus einer Quelle und umfassend mindestens eine erste und eine zweite Ionisierungskammer (IC1 und IC2), umfassend jede eine Sammelelektrode und eine Polarisierungselektrode, wobei die Elektroden jeder betroffenen Ionisierungskammer von einem Gap oder einem Raum, umfassend ein Fluid, getrennt sind, wobei die zwei Ionisierungskammern konfiguriert sind, um von einem Partikelstrahl durchquert zu werden, der von einer selben Quelle kommt, wobei die zwei Ionisierungskammern unterschiedliche Aufladungseffizienzfaktoren aufweisen, wobei die Vorrichtung **dadurch gekennzeichnet ist, dass** sie eine Erfassungsvorrichtung umfasst, die mit einem Rechner verbunden ist, der einen ersten Berechnungsalgorithmus durchführt

- eines Faktors "Verstärkung" relativ zu einer ersten Ionisierungskammer anhand der Gleichung:

$$G = \frac{1-(\frac{i_1}{i_2})_{norm}}{1-f_1}$$

wobei

- G der Faktor "Verstärkung" relativ zur ersten Ionisierungskammer (IC1) ist,

- $(\frac{i_1}{i_2})_{norm}$ das Verhältnis theoretischer Werte von Ausgangssignalen (i1 und i2) in den zwei Ionisierungskammern (IC1 und IC2), standardisiert durch das Verhältnis ihres jeweiligen Amplifikationsfaktors (R1/R2), ist, wobei jeder Amplifikationsfaktor von dem Fluid, der Breite des Gap oder des Raums und von der Penetrationskraft des Partikelstrahl in das Fluid für die erste Ionisierungskammer (IC1) abhängt,

- f1 der theoretische Wert des Aufladungseffizienzfaktors in der ersten Ionisierungskammer (IC1) ist,

wobei die theoretischen Werte von Ausgangssignalen (i1, i2) und f1 in Abhängigkeit von intrinsischen und/oder extrinsischen Parametern der zwei betroffenen Kammern (IC1 und IC2) sowie in Abhängigkeit vom Stromstärkewert des Partikelstrahls berechnet werden, wobei der Verstärkungsfaktor unabhängig vom Stromwert des Partikelstrahls ist,

wobei der Rechner einen zweiten Berechnungsalgorithmus der vom Partikelstrahl erbrachten Dosisleistung durchführt, umfassend die folgenden Schritte:

- Messen der Ausgangssignale (i1 und i2) in den zwei Ionisierungskammern und Bilden des standardisierten

Verhältnisses $(\frac{i_1}{i_2})_{norm}$ zwischen den Werten der Ausgangssignale (i1 und i2),

- Berechnen der Aufladungsrekombinationsrate (1-f1) und Ableitung des Aufladungseffizienzfaktors (f1) in der ersten Ionisierungskammer (IC1) auf der Basis des Ergebnisses des ersten Algorithmus und auf der Basis der Kenntnis des Faktors "Verstärkung" der ersten Ionisierungskammer,

- Berechnen der Dosisleistung von dem Strahl auf der Basis des Aufladungseffizienzfaktors (f1) in der ersten Ionisierungskammer erbrachten Dosisleistung.

2. Vorrichtung nach Anspruch 1, **dadurch gekennzeichnet, dass** die zwei Ionisierungskammern eine Differenz im Bereich der Gap- oder Raum-Stärken zwischen der Sammel- und Polarisierungselektrode inklusive aufweisen, was zu einer Differenz des Aufladungseffizienzfaktors führt.

3. Vorrichtung nach Anspruch 1 oder 2, **dadurch gekennzeichnet, dass** die zwei Ionisierungskammern eine Differenz im Bereich der elektrischen Felder aufweisen, die in jedem der Gaps oder Räume zwischen der Sammel- und Polarisierungselektrode inklusive entstehen, was zu einer Differenz des Aufladungseffizienzfaktors führt.

4. Vorrichtung nach einem der vorangehenden Ansprüche, **dadurch gekennzeichnet, dass** die zwei Ionisierungskammern eine Differenz im Bereich der Art der in jedem der Gaps oder Räume zwischen der Sammel- und Polarisierungselektrode inklusive vorhandenen Fluide aufweisen, was zu einer Differenz des Aufladungseffizienzfaktors führt.

5. Vorrichtung nach einem der vorangehenden Ansprüche, **dadurch gekennzeichnet, dass** die zwei Ionisierungskammern eine Differenz im Bereich des Drucks und/oder der Temperatur des in jedem der Gaps oder Räume zwischen der Sammel- und Polarisierungselektrode inklusive vorhandenen Fluids aufweisen, was zu einer Differenz des Aufladungseffizienzfaktors führt.

6. Vorrichtung nach einem der vorangehenden Ansprüche, **dadurch gekennzeichnet, dass** die zwei Ionisierungskammern eine Differenz im Bereich ihrer Geometrie und/oder ihrer Lokalisierung derart aufweisen, dass das in jede der zwei Ionisierungskammern eintretende Strahlenfeld von einer Ionisierungskammer zur anderen unterschiedlich ist, was zu einer Differenz des Aufladungseffizienzfaktors führt.

7. Vorrichtung nach einem der vorangehenden Ansprüche, **dadurch gekennzeichnet, dass** die zwei Ionisierungskammern von einem oder mehreren Energieabsorbern derart getrennt sind, dass die in jede der zwei Ionisierungskammern eintretende Strahlenergie von einer Ionisierungskammer zur anderen unterschiedlich ist, was zu einer Differenz des Aufladungseffizienzfaktors führt.

8. Messverfahren der Dosisleistung, erbracht von einem Partikelenergiestrahl aus einer Quelle, **dadurch gekennzeichnet, dass** die folgenden Schritte durchgeführt werden:

(i) Verwenden der Vorrichtung nach einem der vorangehenden Ansprüche, für die die intrinsischen und/oder extrinsischen Parameter jeder der zwei Ionisierungskammern gewählt werden,
(ii) Ermitteln eines Faktors "Verstärkung", gegeben durch die Gleichung G = (1-($i_1/i_2$)norm)/(1-$f_1$),
wobei

- G der Faktor "Verstärkung" relativ zur ersten Ionisierungskammer (IC1) ist,

- $(\frac{i_1}{i_2})_{norm}$ das Verhältnis der theoretischen Werte von Ausgangssignalen (i1 und i2) in den zwei Ionisierungskammern (IC1 und IC2), standardisiert durch das Verhältnis ihres jeweiligen Amplifikationsfaktors (R1/R2), ist, wobei jeder Amplifikationsfaktor von dem Fluid, der Breite des Gap oder des Raums und von der Penetrationskraft des Partikelstrahl in das Fluid für die erste Ionisierungskammer abhängt,
- f1 der theoretische Wert des Aufladungseffizienzfaktors in der ersten Ionisierungskammer (IC1) ist,

wobei die theoretischen Werte von Ausgangssignalen (i1, i2) und f1 in Abhängigkeit der intrinsischen und/oder extrinsischen Parametern der zwei im ersten Schritt des Verfahrens gewählten Kammern (IC1 und IC2) sowie in Abhängigkeit von einem vorbestimmten Stromstärkewert des Partikelstrahls berechnet werden, wobei der Verstärkungsfaktor unabhängig vom Stromwert des Partikelstrahls ist,
(iii) Messen des Ausgangssignals für die zwei Ionisierungskammern,
(iv) Verarbeiten der Signale mit einem Rechner, der einen Bestimmungsalgorithmus des Aufladungseffizienzfaktors der ersten Kammer auf der Basis des Verstärkungsfaktors, gefolgt von der Berechnung der Dosisleistung, erbracht von dem Strahl, durchführt.

9. Messverfahren der Dosisleistung, erbracht von einem Partikelenergiestrahl nach Anspruch 8, **dadurch gekennzeichnet, dass** die Berechnung der von dem Strahl erbrachten Dosisleistung gemäß den folgenden Schritten durchgeführt wird:

(i) Berechnen des standardisierten Verhältnisses $(\frac{i_1}{i_2})_{norm}$ der in den zwei Ionisierungskammern (IC1 und IC2) gemessenen Ausgangssignale (i1 und i2),
(ii) Berechnen des Aufladungseffizienzfaktors f1 in einer ersten Ionisierungskammer auf der Basis des Verstärkungsfaktors relativ zu dieser Ionisierungskammer und auf der Basis des standardisierten Verhältnisses

$(\frac{i_1}{i_2})_{norm}$ der in den zwei Ionisierungskammern (IC1 und IC2) gemessenen Ausgangssignale (i1 und i2),

(iii) Berechnen der Dosisleistung, erbracht von dem Strahl, auf der Basis der Strommessung in der ersten Ionisierungskammer und des Aufladungseffizienzfaktors relativ zu der ersten Ionisierungskammer (IC1).

10. Verwendung des Messverfahrens nach den Ansprüchen 8 oder 9 zwecks Durchführung einer Dosisleistungsmessung eines Partikelenergiestrahls mit einer Stromstärke von über 1 nA.

**Claims**

1. A dosimetry device for an energy beam of particles coming from a source and comprising at least first and second ionization chambers (IC1 and IC2) each comprising a collector electrode and a polarization electrode, said electrodes of each considered ionization chamber being separated by a gap or space comprising a fluid, said two ionization chambers being configured to be traversed by a beam of particles coming from a same source, said two ionization chambers having different charge collection efficiency factors, said device being **characterized in that** it comprises an acquisition device connected to a calculator carrying out a first algorithm for calculating

- a "gain" factor relative to a first ionization chamber, given by the equation:

$$G = \frac{1 - (\frac{i_1}{i_2})_{norm}}{1 - f_1}$$

where
- G is the "gain" factor relative to the first ionization chamber (IC1),

- $(\frac{i_1}{i_2})_{norm}$ is the ratio of theoretical output signal values (i1 and i2) in said two ionization chambers (IC1 and IC2) normalized by the ratio of their respective amplification factors (R1/R2), each amplification factor depending on said fluid, the width of said gap or space and the penetrating power of the beam of particles in said fluid for the first ionization chamber (IC1),
- f1 is the theoretical value of the charge collection efficiency factor in the first ionization chamber (IC1),

said theoretical output signal values (i1, i2) and f1 being calculated as a function of intrinsic and/or extrinsic parameters of said considered two chambers (IC1 and IC2), as well as based on the value of the current intensity of the particle beam, said gain factor being independent of the value of said current of the particle beam,
said calculator carrying out a second algorithm to calculate the dose flow rate deposited by the particle beam comprising the following steps:

- measuring the output signals (i1 and i2) in said two ionization chambers and establishing the normalized ratio $(\frac{i_1}{i_2})_{norm}$ between said output signal values (i1 and i2);
- calculating the charge recombination rate (1-f1) and deducting the charge collection efficiency factor (f1) in the first ionization chamber (IC1) based on the results of the first algorithm and based on the knowledge of the "gain" factor of the first ionization chamber;
- calculating the dose flow rate deposited by the beam based on the charge collection efficiency factor (f1) in the first ionization chamber.

2. The device according to claim 1, **characterized in that** said two ionization chambers have a difference in gap or space thicknesses comprised between said collector and polarization electrodes, imparting a difference in charge collection efficiency factors.

3. The device according to claim 1 or 2, **characterized in that** said two ionization chambers have a difference in the electrical fields created in each of the gaps or spaces comprised between said collector and polarization electrodes, imparting a difference in charge collection efficiency factor.

4. The device according to any one of the preceding claims, **characterized in that** said two ionization chambers have a difference in the nature of the fluids present in each of the gaps or spaces comprised between said collector and polarization electrodes, imparting a difference in charge collection efficiency factor.

5. The device according to any one of the preceding claims, **characterized in that** said two ionization chambers have a difference in the pressure and/or temperature of the fluid present in each of the gaps or spaces comprised between said collector and polarization electrodes, imparting a difference in charge collection efficiency factor.

6. The device according to any one of the preceding claims, **characterized in that** said two ionization chambers have a difference in their geometry and/or location such that the beam field entering each of said two ionization chambers differs from one ionization chamber to the other, imparting a difference in charge collection efficiency factor.

7. The device according to any one of the preceding claims, **characterized in that** said two ionization chambers are separated by one or several energy absorbers, such that the beam energy entering each of said two ionization chambers differs from one ionization chamber to the other, imparting a difference in charge collection efficiency factor.

8. A method for measuring the dose flow rate deposited by an energy beam of particles coming from a source, **characterized in that** the following steps are carried out:

(i) the device according to any one of the preceding claims is used, for which the intrinsic and/or extrinsic parameters of each of said two ionization chambers are chosen;
(ii) a "gain" factor is established, given by the equation: $G = (1-(i_1/i_2)_{norm})/1-f_1$ where

- G is the "gain" factor relative to the first ionization chamber (IC1),

- $\left(\frac{i_1}{i_2}\right)_{norm}$ is the ratio of theoretical output signal values (i1 and i2) in said two ionization chambers (IC1 and IC2) normalized by the ratio of their respective amplification factors (R1/R2), each amplification factor depending on said fluid, the width of said gap or space and the penetrating power of the beam of particles in said fluid for the first ionization chamber,
- f1 is the theoretical value of the charge collection efficiency factor in the first ionization chamber (IC1),

said theoretical output signal values (i1, i2) and f1 being calculated as a function of intrinsic and/or extrinsic parameters of said considered two chambers (IC1 and IC2), as well as based on a predetermined value of the current intensity of the particle beam, said gain factor being independent of the value of said current of the particle beam,

(iii) the output signal is measured for said two ionization chambers;

(iv) said signals are processed using a calculator carrying out an algorithm for determining the charge collection efficiency factor of said first chamber, based on the gain factor, followed by the calculation of the dose flow rate deposited by said beam.

9. The method for measuring the dose flow rate deposited by an energy beam of particles according to claim 8, **characterized in that** the calculation of the dose flow rate deposited by said beam is done according to the following steps:

(i) calculating the normalized ratio $\left(\frac{i_1}{i_2}\right)_{norm}$ of the output signals (i1 and i2) measured in said two ionization chambers (IC1 and IC2);

(ii) calculating the charge collection efficiency factor f1 in a first ionization chamber based on said gain factor relative to this same ionization chamber and based on the value of the normalized ratio $\left(\frac{i_1}{i_2}\right)_{norm}$ of the output signals (i1 and i2) measured in said two ionization chambers (IC1 and IC2);

(iii) calculating the dose flow rate deposited by said beam based on the measurement of the current in said first ionization chamber and the charge collection efficiency factor relative to said first ionization chamber (IC1).

10. A use of the measuring method according to claims 8 or 9 to measure a dose flow rate of an energy beam of particles whose current intensity is greater than 1 nA.

Fig.1

.

.

.

IC3

IC2

101

IC1

Fig. 2

IC2                    202

                       203

IC1

                       201

Fig.3

**(V1 = V2 = 1000V ; dIC1/dIC2 = 1,25 )**

- → efficacité de collection dans IC1(f1)
- → efficacité de collection dans IC2(f2)
- → i1/i2
- → 1-f1
- → 1 - (i1/i2) norm
- → Gain = (1 - (i1/i2)norm)/(1 - f1)

Fig.4

**(dIC1 = dIC2 = 0,5 ; V1 = 2000, V2 = 1600 )**

efficacité de collection dans IC1(f1)
efficacité de collection dans IC2(f2)
i1/i2
1-f1
1 - (i1/i2) norm
Gain = (1 - (i1/i2)norm)/(1 - f1)

Fig. 5

Variation du facteur gain en fonction de dIC2/dIC1 et de V1/V2

facteur gain

dIC2/dIC1

Fig. 6

EP 2 457 248 B1

**EP 2 457 248 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3287560 A

**Littérature non-brevet citée dans la description**

- **BOAG.** The dosimetry of ionizing radiation. Academic Press, Inc, vol. II